# DEMANDE DE BREVET EUROPEEN

(11) **EP 0 727 340 A1**
(43) Date de publication de la demande: **21.08.1996**
(21) Numéro de dépôt: 96400297.6
(22) Date de dépôt: 13.02.1996
(51) Int. Cl.: B62D 1/10, F16D 1/12

(54) **Dispositif de montage d'un volant de direction de véhicule automobile sur un arbre de direction**

(30) Priorité: 14.02.1995 FR 9501672
(71) Demandeur: ECIA - EQUIPEMENTS ET COMPOSANTS POUR L'INDUSTRIE AUTOMOBILE, F-25400 Audincourt (FR)
(72) Inventeur: Benkhelifa, Nacer, F-25400 Audincourt (FR)
(74) Mandataire: Habasque, Etienne Joel Jean-François

(57) **Abrégé**

Ce dispositif, dans lequel le volant comporte un moyeu (6), un manchon (5) étant interposé entre ce moyeu (6) et l'arbre (1) et comportant des premiers moyens d'immobilisation angulaire (8) adaptés pour coopérer avec des moyens complémentaires (9) du moyeu (6) et des seconds moyens d'immobilisation angulaire (4) adaptés pour coopérer avec des moyens complémentaires (3) de l'arbre, les premiers et seconds moyens d'immobilisation et complémentaires du moyeu, du manchon et de l'arbre étant formés par des parties en saillie et en creux axiales de ceux-ci, est caractérisé en ce que le rapport des nombres des parties en saillie et en creux des premiers et seconds moyens d'immobilisation et complémentaires est un nombre non entier et en ce que le manchon (5) est réglable en position angulaire par rapport au moyeu (6), pour permettre un rattrapage du décalage angulaire du volant par rapport à l'arbre.

## Description

La présente invention concerne un dispositif de montage d'un volant de direction de véhicule automobile sur un arbre de direction.

Plus particulièrement, la présente invention est relative aux dispositifs de montage de volant, qui permettent un réglage de la position angulaire de celui-ci par rapport à l'arbre de direction.

On connaît déjà dans l'état de la technique, un certain nombre de dispositifs de ce type, dans lesquels le volant comporte un moyeu, et un manchon intermédiaire est interposé entre ce moyeu et l'arbre.

Ce manchon intermédiaire comporte à sa surface externe des premiers moyens d'immobilisation angulaire adaptés pour coopérer avec des moyens complémentaires du moyeu du volant et à sa surface interne des seconds moyens d'immobilisation angulaire adaptés pour coopérer avec des moyens complémentaires de l'arbre de direction.

En règle générale, ces premiers et seconds moyens d'immobilisation et complémentaires du moyeu de volant, du manchon et de l'arbre, sont formés par des parties en saillie et en creux axiales de ces pièces, se présentant par exemple sous la forme de cannelures ou de dents, délimitant plusieurs positions de calage angulaire relatives de celles-ci.

C'est ainsi par exemple que les premiers moyens d'immobilisation angulaire et complémentaires du moyeu de volant et du manchon comprennent par exemple un nombre de cannelures double de celui des cannelures des seconds moyens d'immobilisation angulaire et complémentaires du manchon et de l'arbre.

On conçoit alors que ceci permet de rattraper un décalage angulaire du volant par pas correspondant à une demi-cannelure, par déplacement angulaire du moyeu de volant autour du manchon.

Cependant, on conçoit qu'il n'est pas possible de réaliser un nombre illimité de cannelures sur ces pièces pour augmenter la précision du calage angulaire du volant sur l'arbre.

Le but de l'invention est donc de résoudre ces problèmes.

A cet effet, l'invention a pour objet un dispositif de montage d'un volant de direction de véhicule automobile sur un arbre de direction, dans lequel le volant comporte un moyeu, un manchon intermédiaire étant interposé entre ce moyeu et l'arbre de direction, ce manchon comportant des premiers moyens d'immobilisation angulaire adaptés pour coopérer avec des moyens complémentaires du moyeu de volant et des seconds moyens d'immobilisation angulaire adaptés pour coopérer avec des moyens complémentaires de l'arbre de direction, les premiers et seconds moyens d'immobilisation angulaire et complémentaires du moyeu de volant, du manchon et de l'arbre étant formés par des parties en saillie et en creux axiales de ceux-ci, délimitant plusieurs positions de calage angulaire relatives de ceux-ci, caractérisé en ce que le rapport des nombres des parties en saillie et en creux complémentaires des premiers et seconds moyens d'immobilisation angulaire et complémentaires du moyeu de volant, du manchon intermédiaire et de l'arbre de direction, est un nombre non entier, en ce que le manchon est réglable en position angulaire par rapport au moyeu de volant pour permettre un rattrapage du décalage angulaire du volant par rapport à l'arbre de direction, lors de son montage, et en ce que des moyens d'indexation de position sont prévus sur le moyeu de volant et le manchon intermédiaire, les moyens d'indexation de position comprenant des repères de position initiale de réglage, sur le manchon et sur le moyeu de volant, des indications de sens de déplacement du manchon par rapport au moyeu de volant, pour rattraper un décalage dans un sens ou dans l'autre du volant et des indications relatives à l'amplitude du rattrapage du décalage angulaire.

L'invention sera mieux comprise à la lecture de la description qui va suivre, donnée uniquement à titre d'exemple et faite en se référant aux dessins annexés, sur lesquels :
- la Fig.1 représente une vue éclatée en coupe d'un exemple de réalisation d'un dispositif de montage selon l'invention;
- la Fig.2 représente une vue en coupe de ce dispositif de montage en position de montage du volant sur l'arbre de direction; et
- la Fig.3 représente un exemple de réalisation de moyens d'indexation de position entrant dans la constitution d'un dispositif de montage selon l'invention.

On reconnaît sur ces figures, un arbre de direction désigné par la référence générale 1.

Cet arbre de direction comporte à l'une de ses extrémités, une portion tronconique 2 formant butée axiale adaptée pour le montage du volant comme cela sera décrit plus en détail par la suite.

Par ailleurs, cet arbre de direction comporte également des moyens d'immobilisation angulaire formés par exemple par des cannelures axiales, régulièrement réparties autour de celui-ci, et désignés par la référence générale 3 sur cette figure.

Ces moyens sont adaptés pour coopérer avec des moyens complémentaires 4 d'un manchon intermédiaire 5 conçu pour être disposé autour de cet arbre de direction entre celui-ci et un moyeu 6 de volant de direction.

On notera que ce manchon intermédiaire 5 comporte également par exemple une portion tronconique 7 adaptée pour coopérer avec la portion tronconique 2 de l'arbre de direction, et une surface de butée 5a adaptée pour coopérer avec une surface de butée complémentaire 6a du moyeu de volant, pour immobiliser axialement ce manchon et le moyeu de volant sur l'arbre de direction.

Les moyens complémentaires 4 de ce manchon 5 sont formés sur la face interne de celui-ci, tandis que sur sa face externe, sont prévus d'autres moyens d'immobilisation angulaire désignés par la référence générale 8, ces moyens d'immobilisation angulaire 8 étant adaptés pour coopérer avec des moyens complémentaires 9 du moyeu de volant.

Ce moyeu est associé, dans cet exemple de réalisation, à une rondelle 10 et à une vis 11 adaptée pour traverser ce moyeu de volant et le manchon, afin de coopérer avec un trou taraudé prévu à l'extrémité de l'arbre pour assurer l'immobilisation axiale du moyeu de volant et du manchon sur l'arbre de direction.

On notera que les moyens d'immobilisation angulaire 8 et les moyens complémentaires 9 respectivement du manchon intermédiaire 5 et du moyeu de volant 6, peuvent également être constitués par des cannelures complémentaires régulièrement réparties autour de ceux-ci.

Il va de soi bien entendu que ces moyens d'immobilisation et complémentaires peuvent être formés par des parties en saillie et en creux axiales complémentaires de ces pièces, autres que des cannelures, délimitant plusieurs positions de calage angulaire de celles-ci.

Selon l'invention, le rapport du nombre des parties en saillie et en creux complémentaires des premiers et des seconds moyens d'immobilisation angulaire et complémentaires du moyeu de volant, du manchon et de l'arbre, est un nombre non entier et le manchon 5 est réglable en position angulaire par rapport au moyeu du volant 6 pour permettre un rattrapage du décalage angulaire du volant par rapport à l'arbre, lors de son montage.

On conçoit alors qu'il est possible, par rotation du manchon intermédiaire 5 par rapport au moyeu de volant 6, d'améliorer la précision de calage du volant de direction sur l'arbre par rapport aux dispositifs de l'état de la technique.

On conçoit en effet que si les moyens d'immobilisation angulaire 3 de l'arbre de direction 1 et complémentaires 4 du manchon 5 comportent 40 cannelures, la précision du calage correspondant de ces pièces est de 360°/40 = 9°.

Par ailleurs, si les moyens d'immobilisation angulaire 8 et les moyens complémentaires 9 respectivement du manchon 5 et du moyeu de volant 6 comportent 41 cannelures, la précision du calage correspondant de ces pièces est de 360°/41 = 8,78°.

Si l'on déplace le moyeu de volant de direction d'une cannelure dans un sens par rapport au manchon et ce manchon et le moyeu de volant ensemble, d'une cannelure dans l'autre sens par rapport à l'arbre de direction, on obtient alors un rattrapage de décalage angulaire du volant par rapport à l'arbre, de 13'.

Si au lieu de faire tourner ces pièces d'une cannelure l'une par rapport à l'autre dans un sens et dans l'autre, on les fait tourner de deux cannelures, on obtient un rattrapage de décalage angulaire du volant par rapport à l'arbre, de 26' et ainsi de suite.

On conçoit alors qu'il est relativement simple d'obtenir un calage très précis du volant de direction par rapport à l'arbre de direction et ce calage sera d'autant plus précis que le rapport du nombre de parties en saillie et en creux complémentaires des premiers et seconds moyens d'immobilisation angulaire et complémentaires du moyeu de volant, du manchon et de l'arbre est un nombre non entier proche d'un nombre entier.

Ce rapport peut par exemple être proche de 1, tel que cela a été décrit précédemment pour des pièces comportant 40 et 41 cannelures.

Il va de soi que ceci est également applicable avec un rapport proche de 2, lorsque par exemple l'arbre de direction et le manchon comportent des moyens d'immobilisation et complémentaires présentant 40 cannelures et que ce manchon et le moyeu de volant de direction comportent des moyens d'immobilisation et complémentaires comprenant 79 ou 81 cannelures.

L'utilisation d'un tel rapport de nombres de parties en saillie et en creux complémentaires, permet encore d'augmenter la précision du calage du volant en réduisant le pas de rattrapage.

On conçoit alors que plus ce rapport est proche d'un grand nombre entier, plus la précision du calage est bonne.

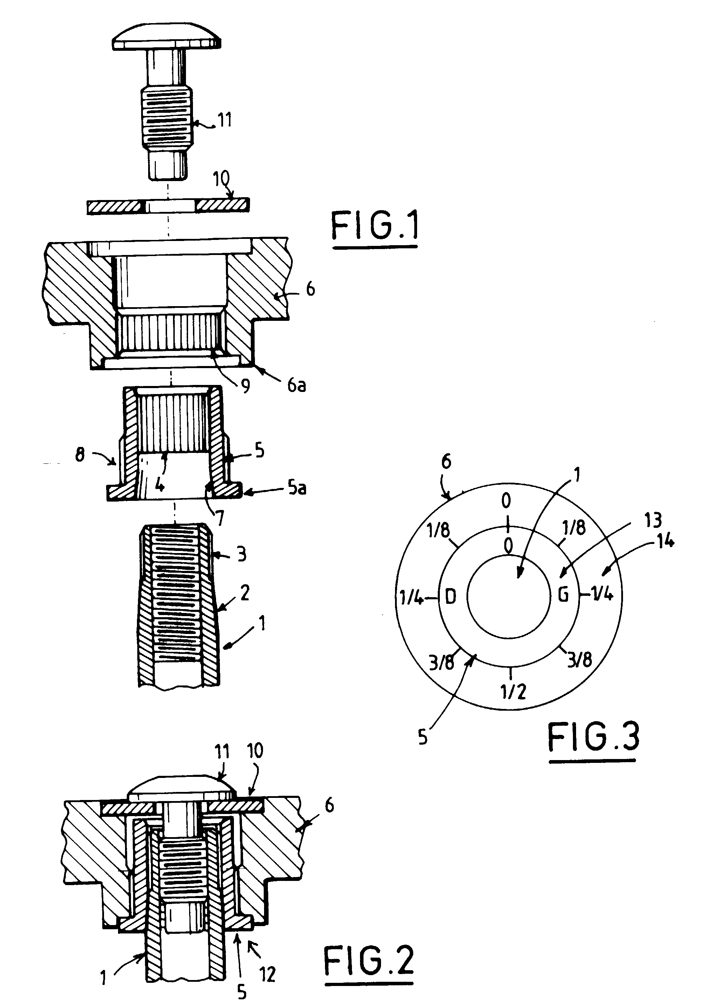

Pour faciliter ces opérations de calage, on peut prévoir sur le moyeu de volant 6 et le manchon intermédiaire 5, des moyens d'indexation de position, comme cela est illustré sur la figure 3.

Ces moyens d'indexation de position sont par exemple prévus sur les faces arrières de ces pièces, ces faces arrières étant désignées de façon générale par la référence 12 sur la figure 2.

On conçoit alors que le montage du volant grâce à un dispositif de montage selon l'invention s'opère de la façon suivante.

L'opérateur de montage dispose tout d'abord le manchon 5 et le moyeu de volant 6 autour de l'arbre de direction 1, dans la position qu'il considère la plus appropriée, les moyens d'indexation de position du manchon et du moyeu de volant étant en concordance comme cela est illustré sur la figure 3, c'est à dire par exemple que des repères de position initiale marqués 0 et 0 sur le moyeu de volant 6 et sur le manchon intermédiaire 5 respectivement sont en regard l'un de l'autre.

L'opérateur de montage constate alors un décalage angulaire du volant, les roues du véhicule étant en position de ligne droite.

Lors de cette constatation, l'opérateur estime également l'amplitude du décalage angulaire du volant.

Il retire alors le moyeu de volant et le manchon, de l'arbre de direction. Il procède ensuite à un réglage du manchon intermédiaire en position angulaire par rapport au moyeu de volant, en utilisant les moyens d'indexation de position, ceux-ci comprenant par exemple sur le manchon des indications G ou D pour gauche ou droite, 13, relatives au sens de déplacement de ce manchon par rapport au moyeu de volant pour rattraper un décalage angulaire du volant dans un sens ou dans l'autre.

Ces moyens d'indexation de position comportent également par exemple des indications 14 relatives à l'amplitude du rattrapage du décalage angulaire, ces indications se présentant par exemple sous la forme d'indications de fractions de pas de parties en saillie et en creux complémentaires rattrapées.

Une fois cette première opération de calage effectuée, l'opérateur de montage replace le moyeu de volant avec le manchon maintenu en position dans celui-ci, sur l'arbre de direction dans la position qu'il estime la plus appropriée afin de contrôler qu'il a effectué le bon rattrapage angulaire.

Il va de soi qu'une opération d'affinement de ce rattrapage peut également être envisagée si celui-ci n'est toujours pas satisfaisant.

Bien entendu différents modes de réalisation de ces moyens d'indexation de position et de ce dispositif de montage peuvent être envisagés.

C'est ainsi par exemple que les parties en saillie et en creux axiales complémentaires du moyeu de volant, du manchon intermédiaire et de l'arbre peuvent être constituées par des moyens autres que des cannelures complémentaires, comme par exemple par des dents.

Par ailleurs, les moyens d'immobilisation axiale du moyeu de volant sur l'arbre de direction peuvent également être prévus directement sur celui-ci et non pas sur le manchon intermédiaire comme cela est représenté sur les figures 1 et 2.

Dans ce cas, le moyeu de volant comporte à son extrémité opposée à celle adaptée pour recevoir la vis 11, une surface de butée de forme tronconique complémentaire à celle de l'arbre de direction, le manchon se présentant sous la forme d'une douille engagée entre l'arbre et le moyeu de volant.

Il va de soi également que la vis 11 adaptée pour coopérer avec la rondelle 10 et un trou taraudé ménagé à l'extrémité de l'arbre, pour assurer l'immobilisation axiale du moyeu de volant sur cet arbre, peut être remplacée par un écrou de serrage adapté pour coopérer avec une extrémité filetée de cet arbre, faisant saillie au-delà du moyeu de volant.

Bien entendu, des moyens de liaison du manchon et du moyeu de volant peuvent également être envisagés pour éviter que ceux-ci ne se séparent complètement.

## Revendications

1. Dispositif de montage d'un volant de direction de véhicule automobile sur un arbre de direction, dans lequel le volant comporte un moyeu (6), un manchon intermédiaire (5) étant interposé entre ce moyeu (6) et l'arbre de direction (1), ce manchon (5) comportant des premiers moyens d'immobilisation angulaire (8) adaptés pour coopérer avec des moyens complémentaires (9) du moyeu (6) de volant et des seconds moyens d'immobilisation angulaire (4) adaptés pour coopérer avec des moyens complémentaires (3) de l'arbre de direction, les premiers et seconds moyens d'immobilisation angulaire et complémentaires du moyeu de volant, du manchon et de l'arbre étant formés par des parties en saillie et en creux axiales de ceux-ci, délimitant plusieurs positions de calage angulaire relatives de ceux-ci, caractérisé en ce que le rapport des nombres des parties en saillie et en creux complémentaires des premiers et seconds moyens d'immobilisation angulaire et complémentaires du moyeu de volant (6), du manchon intermédiaire (5) et de l'arbre de direction (1), est un nombre non entier, en ce que le manchon (5) est réglable en position angulaire par rapport au moyeu de volant (6) pour permettre un rattrapage du décalage angulaire du volant par rapport à l'arbre de directior (1), lors de son montage, et en ce que des moyens d'indexation de position sont prévus sur le moyeu de volant (6) et le manchon intermédiaire (5), les moyens d'indexation de position comprenant des repères de position initiale de réglage (0,0), sur le manchon et sur le moye de volant, des indications (13) de sens de déplacement (G,D) du manchon par rapport au moyeu de volant, pour rattraper un décalage dans un sens ou dans l'autre du volant et des indications (14) relatives à l'amplitude du rattrapage du décalage angulaire.

2. Dispositif selon la revendication 1, caractérisé en ce que le rapport est un nombre non-entier le plus proche possible d'un nombre entier.

3. Dispositif selon l'une quelconque des revendications précédentes, caractérisé en ce que les parties en saillie et en creux axiales du moyeu de volant (6), du manchon intermédiaire (5) et de l'arbre de direction (1) sont formées par des cannelures de ceux-ci.
